# EUROPÄISCHE PATENTSCHRIFT

(11) **EP 2 271 596 B1**
(45) Veröffentlichungstag und Bekanntmachung des Hinweises auf die Patenterteilung: **25.04.2012**
(21) Anmeldenummer: 09738090.1
(22) Anmeldetag: 27.04.2009
(51) Int. Cl.: C04B 38/02

(54) **ELASTISCHER ANORGANISCH-ORGANISCHER HYBRIDSCHAUMSTOFF**
ELASTIC INORGANIC-ORGANIC HYBRID FOAM
MOUSSE ÉLASTIQUE HYBRIDE INORGANIQUE-ORGANIQUE

(30) Priorität: 29.04.2008 EP 08155369
(43) Veröffentlichungstag der Anmeldung: 12.01.2011
(73) Patentinhaber: BASF SE, 67056 Ludwigshafen (DE)
(72) Erfinder: ULANOVA, Tatiana, 67063 Ludwigshafen (DE); HAHN, Klaus, 67281 Kirchheim (DE); MÖCK, Christof, 68259 Mannheim (DE); ALTEHELD, Armin, 55543 Bad Kreuznach (DE); HÄHNLE, Hans-Joachim, 67435 Neustadt (DE); RANFT, Meik, 64625 Bensheim-Hochstädten (DE); KUJAT, Christof, 67434 Neustadt (DE)
(86) Internationale Anmeldenummer: PCT/EP2009/055020
(87) Internationale Veröffentlichungsnummer: WO 2009/133046

(56) Entgegenhaltungen:
- WO-A-2008/007187
- DE-A1- 2 165 912
- DE-A1- 2 227 147
- DE-A1- 2 520 079
- DE-A1-102004 006 563
- DE-A1-102004 034 604
- FR-A- 1 463 369
- US-A- 3 878 278
- US-A- 4 464 486

## Beschreibung

Die Erfindung betrifft ein Verfahren zur Herstellung eines elastischen Silikatschaumstoffes, sowie den nach dem Verfahren erhältlichen Schaumstoff und dessen Verwendung.

Zur Wärme- und Schalldämmung werden häufig organische Schaumstoffe auf Basis von Polystyrol, Polyolefinen oder Polyurethanen eingesetzt. Diese sind jedoch ohne Zusatz von Flammschutzadditiven verhältnismäßig leicht entflammbar und brennbar.

Aufgrund ihrer chemischen Zusammensetzung besitzen Melamin-Formaldehyd-Schaumstoffe bereits günstige Brandeigenschaften. Zur Verbesserung der Brandeigenschaften wird das Zellgerüst von offenzellige Melaminharzschaumstoffen beispielsweise mit einem Ammoniumsalz (EP-A 1 146 070) oder Natriumsilikat (WO 2007/023118) imprägniert.

In DE-A 21 65 912 ist ein Verfahren zur Herstellung von Schaumstoffen beschrieben, bei dem wässrige Silikatlösungen zusammen mit säureabspaltenden Härtern mit Hilfe von flüchtigen organischen Treibmitteln verschäumt und gehärtet werden. Die Dichte der offenzelligen Schaumstoffe variiert zwischen 20 und 900 g/l.

Die DE-A 32 44 523 beschreibt die Herstellung von Ortschäumen, wobei eine Alkalisilikatlösung mit einer Härterlösung und einem flüssigem Treibgas unter Druck vermischt wird. Als Härter werden säureabspaltende Carbonsäureester eingesetzt.

Die US 3,737,332 beschreibt einen geschlossenzelligen Schaumstoff hoher Dichte, der durch Einblasen von Luft in eine Tonerdeaufschlämmung und anschließendes Trocknen und Calcinieren bei Temperaturen im Bereich von 540 bis 1500°C erhalten werden kann. Die Geschlossenzelligkeit wird durch die Stabilisierung der Tonerdeaufschlämmung durch Fettsäureamide erreicht. Um die Tonpartikel zu in den Zellwänden zu fixieren und den Schaumstoff stabiler zu machen, wird anschließend bei hohen Temperaturen calciniert.

Die vorgenannten anorganischen Schaumstoffe auf Silikat-Basis sind naturgemäß schwer entflammbar. Sie weisen jedoch in der Regel eine relativ hohe Dichte und Sprödigkeit auf.

Aus der DE 22 27 147 A1 und DE 25 20 079 A1 sind anorganisch-organische Kunststoffe und Schaumstoffe hoher Festigkeit, Elastizität, Wärmeformbeständigkeit und Schwerentflammbarkeit bekannt, welche durch Vermischen einer wässrigen Silikatlösung mit einem organischen Präpolymeren mit endständigen Isocyanatgruppen oder durch Reaktion eines Gemisches aus wässrigem Kieselsol und organischem Polyisocyanat erhältlich sind.

Die WO 031018476 beschreibt einen elastischen anorganischen Schaumstoff mit einer Dichte von weniger als 25 kg/m³ auf Basis eines Alumosilikats mit einem Molverhältnis Si02 : Al₂O₃ von 20 : 1 bis 1 : 1. Der hohe Salzanteil führt bei Herstellung zu Kettenab-bruchreaktionen und die mechanische Stabilität ist jedoch noch nicht ausreichend. Die Reißdehnung liegt für den Schaumstoff unter 1 %.

Die WO 2007/048729 beschreibt einen natriumarmen Silikatschaumstoffe mit einer Dichte von weniger als 25 kg/m³ zur Wärme- oder Schalldämmung. Der offenzellige Schaumstoff wird durch Vermischen einer Dispersion von SiO₂-Partikel, welche einen mittleren Partikeldurchmesser im Bereich von 1 bis 100 nm aufweisen, mit einem Tensid und einem Treibmittel bei Temperaturen unterhalb von 50°C und Verschäumen der Mischung durch Erwärmen auf eine Temperatur im Bereich von 60 bis 100°C oder durch Druckentspannung erhalten. Die mechanische Stabilität des Schaumstoffs wird durch einen Sinterprozess bei Temperaturen über 200°C erzieht.

In der WO2008/132110 wird vorgeschlagen, zur Verbesserung der Verschäumbarkeit eine Teilverseifung von kolloidalen SiO₂-Partikeln mit Alkalimetallhydroxid durchzuführen.

Anorganische flexible Schaumstoffe niedriger Dichte sind aufgrund ihrer hohen Temperaturstabilität, Nichtbrennbarkeit und geringen leichflüchtigen Anteilen für viele Anwendungen interessant. Die bisher vorgeschlagenen Schaumstoffe zeigen jedoch für viele Anwendungen noch nicht die gewünschte Elastizität.

Die DE 10 2004 006 563 A1 beschreibt ein Verfahren zur Herstellung organische - anorganischer Hybridschaumstoffe bei dem ein amorphes Alumosilikat mit einem Tensid unter Zusatz einer organischen Siliciumverbindung verschäumt und mit einer Alkisilikatlösung als Härter für das Alumosilikat gehärtet wird. Als Schäummittel werden Peroxide oder Aluminium verwendet. Die Hybridschäume sollen eine verringerte Wasseraufnahme, erhöhte Abriebfestigkeit und bessere Schallabsorption zeigen.

Die WO 2008/007187 beschreibt einen Hybridmaterial aus einem geschäumten Polymer, insbesondere Polyurethan und einem anorganischen Bindemittel wie Gips oder Zement mit guter thermischer und akustischer Isolationswirkung, Wasserdampfdurchlässigkeit, gutem Brandverhalten und guter Haftung auf Beton und Mörtel.

Der Erfindung lag also die Aufgabe zugrunde, einen nichtbrennbaren Schaumstoff niedriger Dichte bereitzustellen, der sich neben guten Wärme- und Schalldämmelgenschaften durch eine verbesserte Elastizität auszeichnet und somit leicht handhabbar und verarbeitbar ist. Des Weiteren sollte das Verfahren zur Herstellung des Schaumstoffes eine ausreichende mechanische Festigkeit auch ohne energieaufwendigen Sinterschritt ermöglichen.

Demgemäß wurde ein Verfahren zur Herstellung eines Silikatschaumstoffes durch Verschäumen einer Mischung, enthaltend

| | |
|---|---|
| 10 bis 90 Gew.-%, | bevorzugt 10 bis 80 Gew.-%, besonders bevorzugt 40 bis 70 Gew.-% einer wässrigen Dispersion A) von SiO₂-Partikel, welche einen mittleren Partikeldurchmesser im Bereich von 1 bis 100 nm aufweisen, |
| 1 bis 45 Gew.-%, | bevorzugt 5 bis 30 Gew.-%, besonders bevorzugt 10 bis 20 Gew.-% eines in Wasser gelösten aminofunktionalisierten , Polymeren B) |
| 5 bis 50 Gew.-%, | bevorzugt 10 bis 50 Gew.-%, besonders bevorzugt 20 bis 35 Gew.-% eines Treibmittels C) |
| 1 bis 5 Gew.-%, | bevorzugt 2 bis 3 Gew.% eines Emulgators D) |
| 0,01 bis 5 Gew.-%, | bevorzugt 0,1 bis 1 Gew.-% ein mit dem Polymeren B) reaktions-fähigen Vernetzers E) |

gefunden. Die Gewichtsprozente der in Wasser gelösten oder dispergierten Komponenten A) und B) beziehen sich auf den Feststoff dieser Komponenten und die Summe aus A) bis E) ergeben 100 Gew.-%

Ein bevorzugtes Verfahren zur Herstellung des erfindungsgemäßen Silikatschaumstoffes umfasst die Stufen:
(a) Mischen einer wässrigen Dispersion von SiO₂-Partikel A), welche einen mittleren Partikeldurchmesser im Bereich von 1 bis 100 nm aufweisen, mit einer wässrigen Lösung des Polymeren B),
(b) Zugabe eines Treibmittels C) und eines Emulgators D),
(c) Zugabe eines mit dem Polymeren B) reaktionsfähigen Vernetzers E),
(d) Verschäumen der nach Stufe (c) erhaltenen Mischung durch Erwärmen auf eine Temperatur im Bereich von 35 bis 100°C oder durch Druckentspannung.

Bevorzugt wird als wässrige Dispersion von SiO₂-Partikeln A) eine wässrige, kolloidale SiO₂-Partikel-Dispersion eingesetzt, die an der Oberfläche hydroxyliert sind. Der mittlere Partikeldurchmesser der SiO₂-Partikel liegt im Bereich von 1 bis 100 nm, bevorzugt im Bereich von 10 bis 50 nm. Die spezifische Oberfläche der SiO₂-Partikel liegt in der Regel im Bereich von 10 bis 3000 m²/g. bevorzugt im Bereich von 30 bis 1000 m²/g.

Der Feststoffgehalt kommerzieller SiO₂-Partikel-Dispersion hängt von der Partikelgröße ab und liegt in der Regel im Bereich von 10 bis 60, bevorzugt im Bereich von 30 bis 50 Gew.-%. Wässrige, kolloidale SiO₂-Partikel-Dispersionen können durch Neutralisation von verdünnten Natriumsilikaten mit Säuren, Ionenaustausch, Hydrolyse von Siliziumverbindungen wie z.B. Alkoxysilanen, Dispersion von pyrogenem Silikat oder Gel-Fällung erhalten werden.

Das Polymer B) ist wasserlöslich und wird in Form einer wässrigen Lösung, bevorzugt in einer Konzentration von mindestens 50 g/l, insbesondere mindestens 100 g/l eingesetzt. Als Polymer B) wird ein aminofunktionalisiertes Polymer, insbesondere ein Polyvinylamin eingesetzt.

Bevorzugte Treibmittel C) sind flüchtige organische Verbindungen, wie z.B. Kohlenwasserstoffe, halogenierte Kohlenwasserstoffe, Alkohole, Ether, Ketone und Ester. Besonders bevorzugt sind C₄-C₈-Kohlenwasserstoffe, insbesondere Butan, Pentan oder Hexan. Die Treibmittel werden bevorzugt in Mengen von 1 bis 40, insbesondere 5 bis 26 Gew.-%, bezogen auf die Feststoffe, eingesetzt.

Zur Emulgierung des Treibmittels und zur Stabilisierung des Schaumes ist der Zusatz eines Emulgators oder eines Emulgatorgemisches D) erforderlich. Als Emulgator D) können anionische, kationische, nichtionische oder amphotereTenside verwendet werden.

Geeignete anionische Tenside sind Diphenylenoxidsulfonate, Alkan- und Alkylbenzolsulfonate, Alkylnaphthalinsulfonate, Olefinsulfonate, Alkylethersulfonate, Alkylsulfate, Alkylethersulfate, alpha-Sulfofettsäureester, Acylaminoalkansulfonate, Acylisethionate, Alkylothercarboxylate, N-Acylsarcosinate, Alkyl- und Alkyletherphosphate. Als nichtionische Tenside können Alkylphenolpolyglykolether, Fettalkoholpolyglykolether, Fettsäurepolyglykolether, Fettsäurealkanolamide, EO/PO-Blockcopolymere, Aminoxide, Glycerinfettsäureester, Sorbitanester und Alkylpolyglucoside verwendet werden. Als kationische Tenside kommen Alkyltriammoniumsalze, Alkylbenzyldimethylammoniumsalze und Alkylpyridiniumsalze zum Einsatz. Die Emulgatoren werden vorzugsweise in Mengen von 0,1 bis 5 Gew.%, bezogen auf die SiO₂-Partikel, zugesetzt.

Als Vernetzer E) eignen sich alle mit dem wasserlöslichen Polymeren B) reaktionsfähigen Verbindungen. Das wasserlösliche Polymer B) und der Vernetzer E) werden bevorzugt so ausgewählt, dass die Reaktionsdauer bei der Verschäumtemperatur bis zum vollständigen Umsatz im Bereich von 1 bis 30 Sekunden liegt.

Bevorzugt werden als Vernetzer E) Aldehyde, Isocyanate, Epoxide, Acrylate, Acrylamide, Ester, Divinylsolfanate, besonders bevorzugt Ethandial, eingesetzt.

Für einen guten Brandschutz sollte der Anteil an organischen Bestandteilen in dem anorganischen-organischen Hybridschaumstoff möglichst gering sein. Die Summe der Feststoffanteile des wasserlöslichen Polymeren B) und des Vernetzers E) liegen daher bevorzugt im Bereich von 1 bis 30 Gew.-%, besonders bevorzugt im Bereich von 5 bis 25 Gew.-%, bezogen auf den Silikatschaumstoff.

Die zu verschäumende Mischung kann weiterhin übliche Zusatzstoffe, wie z.B. Pigmente und Füllstoffe enthalten. Geeignete Füllstoffe sind beispielsweise Tonmineralien, wie Kaolin, Silikate, wie Aluminiumsilikat, Sulfate wie Calciumsulfat oder faserförmige Füllstoffe, wie Glas- oder Mineralwolle. Zur Anfärbung der Silikatstruktur können z.B. Metalloxide, etwa von Eisen, Kupfer, Chrom, Mangan, Cobalt, Nickel, Selen oder der seltenen Erden verwendet werden. Zur Verbesserung der thermischen Isolierwirkung können IR-Absorber und/oder Reflektoren, z.B. Cerverbindungen zugesetzt werden. Der Zusatz von Boroxid, Boraten, Phosphaten oder Aluminiumoxiden kann zur Optimierung der thermischen, elektrischen oder mechanischen Eigenschaften des Silikatgerüsts erfolgen.

Zur besseren Verschäumbarkeit können viskositätssteigernde Additiven, z.B. Stärke oder modifizierte Zellulosen zugesetzt werden.

Das Treibmittel wird in Stufe (b) bevorzugt bei Temperaturen unterhalb von 50°C, besonders bevorzugt bei Temperaturen im Bereich von 10 bis 30°C in der Mischung dispergiert.

Das Verschäumen der aus Stufe (c) erhaltenen Mischung kann in Stufe (d) durch Erwärmen auf eine Temperatur im Bereich von 35 bis 100°C, vorzugsweise im Bereich von 60 bis 90°C erfolgen. Das Erwärmen bzw. Erhitzen kann mit üblichen Methoden durchgeführt werden, z.B. mit Heizschrank, Heißluft oder Mikrowelle. Die Mikrowelle ist bevorzugt, weil sie eine besonders homogene und schnelle Erwärmung bzw. Erhitzung ermöglicht.

Bei einer anderen Ausführungsform wird die Mischung in Stufe (d) durch Druckentspannung verschäumt. Dadurch kommt es zur Expansion des Treibmittels und es bildet sich ebenfalls ein fester Schaum. Die Druckminderung beinhaltet auch, dass die Mischung unter einem Druck P1 durch eine Düse auf einen Druck P2<P1 entspannt wird, wobei P1>1 bar ist. Bei diesen Ausführungsformen ist eine Erwärmung zum Zweck der Schäumung nicht zwingend nötig.

Zur Verbesserung der mechanischen Stabilität kann der Schaumstoff mit einer Lösung von Alkoxysilanen behandelt werden.

Zur Erhöhung der mechanischen Stabilität, kann der Schaumstoff nach Stufe (d) bei 100 bis 140°C getrocknet und in einer nachfolgenden Stufe (e) bei einer Temperatur oberhalb 500°C, bevorzugt im Bereich von 550-800°C versintert werden. Aufgrund der Verwendung des wasserlöslichen Polymeren B) und des Vernetzers E) als organischen Komponenten muss der erhaltene Schaumstoff nicht notwendigerweise gesintert werden. Der Schaumstoff zeichnet sich durch hohe Elastizität, eine Reißdehnung von über 5% aus und erfüllt den Brandtest A2 nach DIN 4102.

Anschließend an Stufe (e) kann der erhaltene elastische anorganische Schaumstoff mit einer für Glasfasern üblichen Schlichte, beispielsweise Silanen, imprägniert werden. Diese Nachbehandlung kann zu einer Verbesserung der mechanischen Stabilität durch Senkung der Kerbschlaganfälligkeit führen. Die Imprägnierung kann auch mit einer erhöhten Konzentration des Vernetzers durchgeführt werden. Die Nachvernetzung kann die mechanische Stabilität erhöhen und die Quellbarkeit senken.

Eine Nachbehandlung kann auch zur Hydrophobierung des Schaumstoffs eingesetzt werden. Bevorzugt werden hierbei hydrophobe Beschichtungsmittel eingesetzt, die eine hohe Temperaturstabilität und eine geringe Brennbarkeit aufweisen, beispielsweise Silikone, Silikonate oder fluorierte Verbindungen.

Bei dem beschriebenen Verfahren entstehen Schaumstoffblöcke bzw. -platten, die zu beliebigen Formen zurechtgeschnitten werden können.

Die Dichte des Schaumstoffs beträgt in der Regel 10 bis 1000 kg/m³, bevorzugt weniger als 100 kg/m3, besonders bevorzugt liegt sie im Bereich von 5 bis 50 kg/m³.

Der nach dem erfindungsgemäßen Verfahren erhältliche Schaumstoff hat bevorzugt eine offenzellige Struktur mit einer Offenzelligkeit, gemessen nach DIN ISO 4590, von mehr als 50 %, insbesondere mehr als 80 %.

Der mittlere Porendurchmesser liegt bevorzugt im Bereich von 10 bis 1000 µm, insbesondere im Bereich von 50 bis 500 µm.

Der Schmelzpunkt oder Erweichungspunkt des erfindungsgemäßen Schaumstoffs liegt unter 1600 °C, bevorzugt im Bereich von 700 bis 800°C. Mechanisch stabile Silikatschaumstoffe mit hohem Schmelzpunkt oder Erweichungspunkt können erhalten werden, wenn man von einer kolloidalen, wässrigen Dispersion kleiner, fester Siliciumdioxidpartikel ausgeht.

Der nach dem erfindungsgemäßen Verfahren erhältliche Schaumstoff kann auf vielfältige Weise zur Wärme- und Schalldämmung im Bauwesen und im Automobilbau eingesetzt werden, beispielsweise zur Wärmedämmung im Hausbau oder als schalldämmendes Material, z. B. im Motorraum, in Automobilen Flugzeugen, Bahnen, Schiffen, etc. Vorzugsweise liegen Anwendungsfelder in Bereichen, die eine hohe Temperaturstabilität und geringe Entflammbarkeit voraussetzen, z.B. in Porenbrennern. Geeignet ist das Material auch zur Isolierung im Umfeld starker Strahlung, die organische Materialien langfristig zersetzt, beispielsweise in Atomkraftwerken.

Des Weiteren eignet sich der nach dem erfindungsgemäßen Verfahren erhältliche Schaumstoffe auch in Anwendungen, in denen offenzellige Aminoplastschaumstoff eingesetzt werden, beispielsweise für feuerfeste Textilien, Polster, Matratzen, Filter und Katalysatorträger. Er weist eine Tieftemperaturelastizität vergleichbar mit offenzelligen Aminoplastschaumstoffen auf. Als Poliermittel zeichnet er sich durch eine höhere Härte und Abrasivität für sehr harte Flächen aus.

### Beispiel 1:

Zu 25 g einer wässrigen Dispersion von kolliodalem Siliziumdioxid (mittlerer Partikeldurchmesser 30 nm, Feststoffgehalt 45 Gew.-%) wurden 30 g einer wässrigen Polymerlösung auf Basis von Vinylamin und N-Vinylformamid (Feststoffgehalt 10 Gew.-%) gegeben. Danach wurden 0,55 g eines nichtionischen Tensids auf Basis von Alkylpolyglucosid gelöst und 6 g Pentan durch intensives Rühren dispergiert. Anschließend wurde 0,03 g Ethandial zugegeben. Durch Erwärmen im Mikrowellenofen auf ca. 80°C entstand ein Schaumstoffblock. Nach anschließender Trocknung bei 100°C hatte der Schaumstoff eine Dichte von 50 g/l und zeigte eine hohe mechanische Festigkeit und Reißdehnung.

### Beispiel 2:

Zu 35 g einer wässrigen Dispersion von kolloidalem Siliziumdioxid (mittlerer Partikeldurchmesser 30 nm, Feststoffgehalt 45 Gew.-%) wurden 30 g einer wässrigen Polymerlösung auf Basis von Vinylamin und N-Vinylformamid (Feststoffgehalt 10 Gew.-%) und 5g Aluminiumsilikat gegeben. Danach wurden 0,55 g eines nichtionischen Tensids auf Basis von Alkylpolyglucosid gelöst und 6 g Pentan durch intensives Rühren dispergiert. Anschließend wurde 0,03 g Ethandial zugegeben. Durch Erwärmen im Mikrowellenofen auf ca. 80°C entstand ein Schaumstoffblock. Nach anschließender Trocknung bei 100°C hatte der Schaumstoff eine Dichte von 40 g/l.

## Patentansprüche

1. Verfahren zur Herstellung eines Silikatschaumstoffes durch Verschäumen einer Mischung, enthaltend
10 bis 90 Gew.-% einer wässrigen Dispersion von SiO₂-Partikel A), welche einen mittleren Partikeldurchmesser im Bereich von 1 bis 100 nm aufweisen,
1 bis 45 Gew.% eines in Wasser gelösten aminofunktionalisierten Polymeren B)
5 bis 50 Gew.% eines Treibmittels C)
1 bis 5 Gew.% eines Emulgators D)
0,01 bis 5 Gew.% ein mit dem Polymeren B) reaktionsfähiger Vernetzer E),
wobei sich die Gewichtsprozente von den Komponenten A) und B) auf Feststoff beziehen und die Summe aus A) bis E) 100 Gew.-% ergeben.

2. Verfahren nach Anspruch 1, **dadurch gekennzeichnet, dass** es die folgenden Stufen umfasst:
(a) Mischen einer wässrigen Dispersion von SiO₂-Partikel A), welche einen mittleren Partikeldurchmesser im Bereich von 1 bis 100 nm aufweisen, mit einer wässrigen Lösung des Polymeren B),
(b) Zugabe eines Treibmittels C) und eines Emulgators D) und Dispergieren des Treibmittels,
(c) Zugabe eines mit dem Polymeren B) reaktionsfähigen Vernetzers E),
(d) Verschäumen der nach Stufe (c) erhaltenen Mischung durch Erwärmen auf eine Temperatur im Bereich von 35 bis 100°C oder durch Druckentspannung.

3. Verfahren nach Anspruch 1 oder 2, **dadurch gekennzeichnet, dass** als aminofunktionalisiertes Polymer ein Polyvinylamin eingesetzt wird.

4. Verfahren nach einem der Ansprüche 1 bis 3, **dadurch gekennzeichnet, dass** als Emulgator D) ein Alkylpolyglucosid, Alkylethersulfat oder Alkyletherphosphat eingesetzt wird.

5. Verfahren nach einem der Ansprüche 1 bis 4, **dadurch gekennzeichnet, dass** als Treibmittel C) ein C₄-C₈-Kohlenwasserstoff eingesetzt wird.

6. Verfahren nach einem der Ansprüche 1 bis 5, **dadurch gekennzeichnet, dass** als Vernetzer E) ein Dialdehyd eingesetzt wird.

7. Verfahren nach einem der Ansprüche 1 bis 6, **dadurch gekennzeichnet, dass** der wässrigen Dispersion von SiO₂-Partikel A) Stärke oder modifizierte Zellulose zugesetzt wird.

8. Verfahren nach einem der Ansprüche 1 bis 7, **dadurch gekennzeichnet, dass** die Summe der Feststoffanteile des Polymeren B) und des Vernetzers E) im Bereich von 1 bis 30 Gew.-%, bezogen auf den Silikatschaumstoff, liegen.

9. Silikatschaumstoff, erhältlich nach einem Verfahren gemäß Anspruch 1 bis 8, **dadurch gekennzeichnet, dass** er eine Dichte im Bereich von 5 bis 50kg/m³ aufweist.

10. Silikatschaumsstoff nach Anspruch 9, **dadurch gekennzeichnet, dass** er eine Offenzelligkeit nach DIN ISO 4589 von mehr als 50 % aufweist.

11. Verwendung des Schaumstoffes nach Anspruch 9 oder 10 zur Wärme- oder Schalldämmung.

12. Verwendung des Schaumstoffes nach Anspruch 9 oder 10 zu Reinigungszwecken oder zum Polieren.

## Claims

1. A process for producing a silicate foam by foaming a mixture comprising
10% to 90% by weight of an aqueous dispersion of SiO₂ particles A) which have an average particle diameter in the range from 1 to 100 nm,
1% to 45% by weight of an amino-functionalized polymer B) in solution in water,
5% to 50% by weight of a blowing agent C),
1% to 5% by weight of an emulsifier D),
0.01% to 5% by weight of a crosslinker E) which is reactive with the polymer B),
the weight percentages of the components A) and B) being based on solids, and the sum of A) to E) making 100% by weight.

2. The process according to claim 1, which comprises the following stages:
(a) mixing an aqueous dispersion of SiO₂ particles A) which have an average particle diameter in the range from 1 to 100 nm with an aqueous solution of the polymer B),
(b) adding a blowing agent C) and an emulsifier D) and dispersing the blowing agent,
(c) adding a crosslinker E) which is reactive with the polymer B),
(d) foaming the mixture obtained from stage (c) by heating to a temperature in the range from 35 to 100°C or by depressurization.

3. The process according to claim 1 or 2, wherein a polyvinylamine is used as amino-functionalized polymer.

4. The process according to any one of claims 1 to 3, wherein an alkylpolyglucoside, alkyl ether sulfate or alkyl ether phosphate is used as emulsifier D).

5. The process according to any one of claims 1 to 4, wherein a C₄-C₈ hydrocarbon is used as blowing agent C).

6. The process according to any one of claims 1 to 5, wherein a dialdehyde is used as crosslinker E).

7. The process according to any one of claims 1 to 6, wherein the aqueous dispersion of SiO₂ particles A) is admixed with starch or modified cellulose.

8. The process according to any one of claims 1 to 7, wherein the sum of the solids fractions of polymer B) and of crosslinker E) is in the range from 1% to 30% by weight, based on the silicate foam.

9. A silicate foam obtainable by a process according to claim 1 to 8, which has a density in the range from 5 to 50 kg/m³.

10. The silicate foam according to claim 9, which has a proportion of open cells in accordance with DIN ISO 4589 of more than 50%.

11. The use of the foam according to claim 9 or 10 for thermal or acoustic insulation.

12. The use of the foam according to claim 9 or 10 for cleaning purposes or for polishing.

## Revendications

1. Procédé pour la préparation d'une mousse de silicate par moussage d'un mélange, contenant
10 à 90% en poids d'une dispersion aqueuse de particules de SiO₂ A), qui présentent un diamètre de particule moyen dans la plage de 1 à 100 nm,
1 à 45% en poids d'un polymère B) fonctionnalisé par amino, dissous dans l'eau
5 à 50% en poids d'un agent gonflant C)
1 à 5% en poids d'un émulsifiant D)
0,01 à 5% en poids d'un réticulant E) apte à une
réaction avec le polymère B),
les % en poids des composants A) et B) se rapportent au solide et la somme de A) à E) valant 100% en poids.

2. Procédé selon la revendication 1, **caractérisé en ce qu'**il comprend les étapes suivantes :
(a) mélange d'une dispersion aqueuse de particules de SiO₂ A), qui présentent un diamètre de particule moyen dans la plage de 1 à 100 nm, avec une solution aqueuse du polymère B),
(b) addition d'un agent gonflant C) et d'un émulsifiant D) et dispersion de l'agent gonflant,
(c) addition d'un réticulant E) apte à une réaction avec le polymère B),
(d) moussage du mélange obtenu selon l'étape (c) par chauffage à une température dans la plage de 35 à 100°C ou par détente de la pression.

3. Procédé selon la revendication 1 ou 2, **caractérisé en ce qu'**on utilise, comme polymère fonctionnalisé par amino, une polyvinylamine.

4. Procédé selon l'une quelconque des revendications 1 à 3, **caractérisé en ce qu'**on utilise comme émulsifiant D) un alkylpolyglucoside, un alkyléthersulfate ou un alkylétherphosphate.

5. Procédé selon l'une quelconque des revendications 1 à 4, **caractérisé en ce qu'**on utilise, comme agent gonflant C), un hydrocarbure en C₄-C₈.

6. Procédé selon l'une quelconque des revendications 1 à 5, **caractérisé en ce qu'**on utilise, comme réticulant E), un dialdéhyde.

7. Procédé selon l'une quelconque des revendications 1 à 6, **caractérisé en ce qu'**on ajoute, à la dispersion aqueuse de particules de SiO₂ A), de l'amidon ou de la cellulose modifiée.

8. Procédé selon l'une quelconque des revendications 1 à 7, **caractérisé en ce que** la somme des proportions solides du polymère B) et du réticulant E) se situe dans la plage de 1 à 30% en poids, par rapport à la mousse de silicate.

9. Mousse de silicate, pouvant être obtenue selon un procédé selon la revendication 1 à 8, **caractérisée en ce qu'**elle présente une densité dans la plage de 5 à 50 kg/m³.

10. Mousse de silicate selon la revendication 9, **caractérisée en ce qu'**elle présente une porosité ouverte selon la norme DIN ISO 4589 de plus de 50%.

11. Utilisation de la mousse selon la revendication 9 ou 10 pour l'isolation thermique ou acoustique.

12. Utilisation de la mousse selon la revendication 9 ou 10 à des fins de nettoyage ou pour le polissage.
